# EUROPEAN PATENT SPECIFICATION

(11) **EP 3 966 129 B1**
(45) Date of publication and mention of the grant of the patent: **25.10.2023**
(21) Application number: 20724933.5
(22) Date of filing: 07.04.2020
(51) Int. Cl.: B65D 75/58

(54) **MULTI-LAYER COVERS WITH DETACHABLE SEGMENT AND METHOD OF THEIR PRODUCTION**
MEHRSCHICHTIGE ÜBERZÜGE MIT ABNEHMBAREM SEGMENT UND VERFAHREN ZU IHRER HERSTELLUNG
RABATS MULTICOUCHES À SEGMENT AMOVIBLE ET LEUR PROCÉDÉ DE PRODUCTION

(30) Priority: 09.05.2019 GR 20190100201; 09.05.2019 GR 20190100202
(43) Date of publication of application: 16.03.2022
(73) Proprietor: K.GKIKAS & CO LP, 15121 Pefki (GR)
(72) Inventor: GKIKA, Anastasia, 15121 Pefki (GR); GKIKAS, Konstantinos, 15121 Pefki (GR)
(74) Representative: Samouilidis, Emmanouil
(86) International application number: PCT/IB2020/053293
(87) International publication number: WO 2020/225618

(56) References cited:
- EP-A1- 2 347 972
- DE-U1- 29 820 856
- GB-A- 2 542 414
- US-A1- 2017 240 331

## Description

The invention refers to closures and covers. In particular the invention refers to closures or covers of containers for facial tissues, wipes and in particular wet wipes, diapers and in general items that require to remain within a container and with no direct contact with the environment.

Closures or covers of containers are usually fabricated from a layer of self-adhesive material that adheres to the surface of the lid of the container. Such containers have an opening and a lid to cover the opening and to protect the interior of the container from the environment. In order to provide an adequate closure of the opening of the container, it is known to use a cover that adheres to the lid and to the area of the surface of the container that is around the lid. By doing so, the lid is protected and remains in its place. Known covers have a main section and a base section. The base section is attached to the box when the cover is in a closed position or lifted to allow access to the interior of the container. However, after the user lifts and attaches the main section of the cover to the surface of the container a few times, dirt damages the adhesive and subsequently the cover cannot adhere properly to the surface of the container around the lid. It is noted that as the main section of the cover adheres to the lid, the lid opens the opening of the container when the main section is lifted and closes the opening of the container when the main section adheres to the surface of the container. US2017/0240331 describes a package with a lidding member and a base member, which is used for food containers. The lidding member has a first layer that is heat sealed to the base member and a second layer. GB 2542414 describes a method to produce a peelable label with one or two layers permanently attached to each other.

The invention aims in a closure or a cover of a container and a container that overcomes the problems of the known containers. A further object of the invention is a closure that seals a container so that the content of the container is protected from the environmental conditions. A further object of the invention is a method to produce covers that may be lifted and adhere to a container that contains wet wipes and other similar items, as many times as needed, with no problems. A further object of the invention is an eco-friendly packaging for facial tissues, wipes and in particular wet wipes, diapers and other similar consumable products.

The invention is defined in the independent claims.

A cover according to the invention performs without problem during its life-time, is light and uses a relatively small amount of preferably recyclable material. The method of its production is efficient and it may be easily applied to cover openings of containers or other items.

Dependent claims contain features that offer further advantages.

A cover according to the invention includes an inner layer that has an inner face and an outer face and an outer layer that has an inner face and an outer face, whereby the inner face of the outer layer and the inner face of the inner layer comprise means to adhere the inner layer and the outer layer to each other, the outer face of the inner layer is at least partially coated with reclosable adhesive to adhere, in use, at least partially to a surface, the inner layer has a detachable segment, which adheres to the outer layer and which has an outer face that is part of the outer face of the inner layer and that it is at least partially or totally covered with reclosable adhesive and at least one of the inner layer and the outer layer comprises means to allow separation and subsequent withdrawal of the detachable segment from the cover.

The detachable segment may be ring shaped and surround the fixed segment. A ring shaped detachable segment may have any form, for example its inner periphery may have an oval shape. In another embodiment the detachable segment is C-shaped. Preferably, the detachable segment surrounds at least partially a fixed segment of the inner layer. Between the detachable segment and the fixed segment there is a cut that facilitates the separation of the detachable segment and the fixed segment and subsequent withdrawal of the detachable segment from the cover. The detachable segment has an inner face that is part of the inner face of the inner layer and that is coated at least partially or totally with release varnish. The inner face of the detachable segment adheres to an area of the inner face of the outer layer, which area is at least partially coated with reclosable adhesive.

The means facilitating separation and subsequent withdrawal of the detachable segment from the cover may be one or more cuts and/or one or more perforation lines provided on the inner layer. A cut may be achieved by engraving a layer.

In an embodiment of the invention, the cover has a base section including a portion of the inner layer and a portion of the outer layer, with a cut or a perforation line, preferably a cut, between the detachable segment and the inner layer of the base section. Optionally, the cover has a flap including a portion of the inner layer and a portion of the outer layer, with a perforation line between the detachable segment and the portion of the inner layer of the flap.

The cover may be applied on the external surface of a container with means to allow access in the interior of the container, preferably an opening. The detachable segment of the inner layer adheres at least partially to the external surface of the container with reclosable adhesive. Optionally, the container has a lid that covers the opening. The detachable segment adheres to the external surface of the container around the opening and optionally around the lid. When the container has a lid, the fixed segment of the inner layer of the cover adheres permanently to the lid. The base section is fixed to the container and the flap facilitates the user to lift the cover from the container.

The invention suggests a method of production of a roll with a plurality of covers, whereby each cover includes an outer layer, an inner layer with a detachable segment that has an inner face that adheres to the outer layer and an outer face that is at least partially covered with reclosable adhesive and whereby each cover further comprises means facilitating the withdrawal and removal of the detachable segment from the inner layer, the method comprising the following steps: (i) providing a roll with a liner and a self-adhesive layer with a first face that adheres with reclosable adhesive to the liner and a free face; (ii) applying a release varnish on predefined areas of the free face, whereby the predetermined areas correspond to the detachable segments of the covers under production; (iii) engraving or perforating the self-adhesive material of the roll to form a border of the detachable segment of the covers under production and producing the means other than said border facilitating the separation and removal of the detachable segments from the inner layer of the covers under production; (iv) adhering a further self-adhesive layer to the free face of the self-adhesive layer of the roll, whereby the predetermined areas that correspond to the detachable segments of the covers under production adheres to an area of the further self-adhesive layer that is coated with reclosable adhesive; (v) engraving the sandwich of the self-adhesive layer of the roll and the further self-adhesive layer, so as to produce a plurality of covers and waste material.

Preferably, the predefined areas on which the release varnish is applied, enclose at least partially areas of the outer face of the inner layer, on which no release varnish is applied, so as to be fixed to the further self-adhesive layer.

In preferred embodiments, the method comprises engraving the self-adhesive material of the roll to form a border between the detachable segment and a fixed segment of the inner layer of the covers under production and perforating the self-adhesive material of the roll to form a border between the detachable segment and a flap of the covers under production. The fixed segment and the flap of each cover are distinct elements with at least part of the detachable segment being in between.

Optionally, the liner is separated from the self-adhesive layer, the adhesive is cancelled or removed on areas of the first face of the self-adhesive layer, which correspond to flaps of the covers under production, and subsequently the liner and the self-adhesive layer are recombined. The separation of the liner from the self-adhesive material may be performed before, after or during application of the release varnish.

The covers have at least two layers. Some embodiments of the invention may include more than two layers, for example three or four.

Embodiments of the invention will be described with reference to the following Figures:
- Figure 1: presents a section of a cover on a container
- Figure 2: presents the layers of the cover of **Figure 1** separated
- Figure 3: presents a 3-D view of the container with the cover of **Figure 1**
- Figure 4: presents the removal and withdrawal of the detachable segment of the cover
- Figure 5: presents an intermediate stage of production of a cover according to the invention
- Figure 6: presents a roll with covers towards the end of the production phase
- Figure 7: presents a roll with covers according to the invention

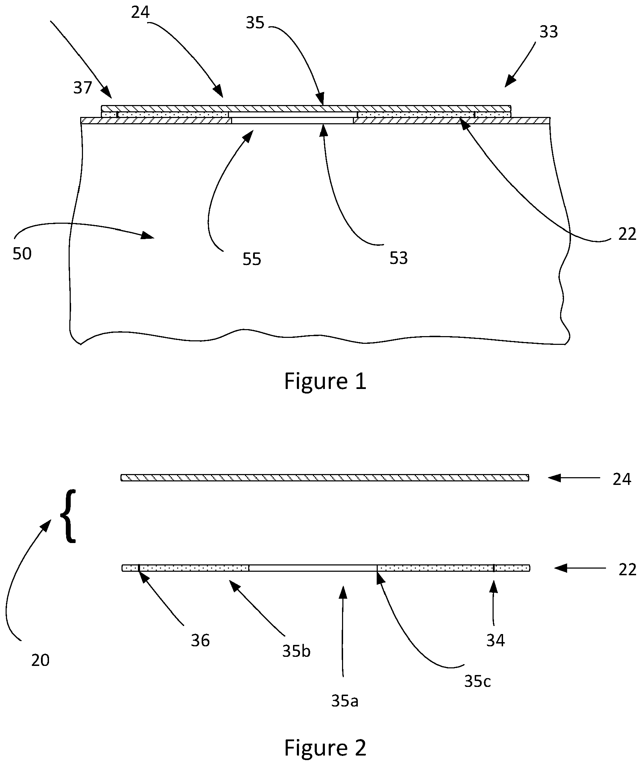

**Figure 1** shows a container **50** with an opening **55** and a lid **53** to cover the opening and to protect the interior of the container from the environment. A cover **20** covers the opening **55** and the lid **53** and protects the content of the container **50.**

The cover **20** has two layers, an inner layer **22** and an outer layer **24,** which adhere to each other. Each one of the inner layer **22** and the outer layer **24** has an inner face and an outer face. The inner face of the inner layer **22** and the inner face of the outer layer **24** adhere to each other. The outer face of the inner layer **22** adheres to the lid **53** of the container **50.**

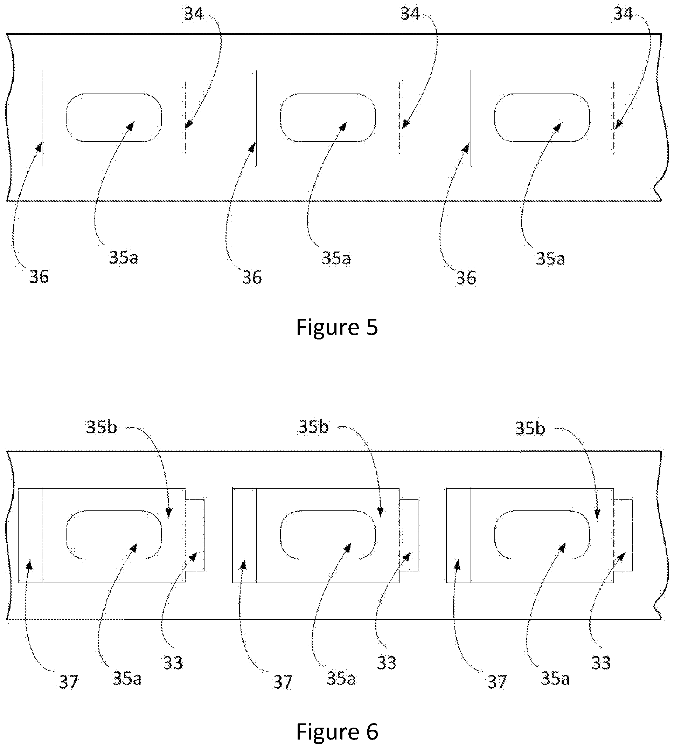

The cover **20** has a main section **35,** a base section **37** and a flap **33.** The base section **37** is attached to the container **50,** when the cover **20** is either in a closed position and prohibits access in the interior of the container **50** or lifted to allow access to the interior of the container **50.** In use, the flap **33** is to be held by the user, i.e. when (s)he lifts the flap **33** or places the cover **20** in the closed position. The plan view of the base section **35** may be almost orthogonal or orthogonal as it is depicted in **Figure 6** or it may have other shapes, as for example it may have other shapes such as C, trough cross-section etc.

The layered structure of the cover **20** results that each section of the cover **20** has also two layers, i.e. an outer layer and an inner layer. Thus, the outer layer of main section **35,** the outer layer of the base section **37** and the outer layer of the flap **33** are portions of the outer layer **24** of the cover **20** and the inner layer of the main section **35,** the inner layer of the base section **37** and the inner layer of the flap **33** are portions of the inner layer **22** of the cover **20.**

The outer face of the inner layer **22,** i.e. the face that is on the other side of the face that adheres to the outer layer **24,** has adhesive to attach the cover **20** to the lid **53** of the container **50.** When the lid **53** is in the closed position, the cover **20** adheres to the lid **53** as well as to the area of the container **50** that is around the lid **53.** In order to facilitate the user to lift the cover **20** from the container **50,** the outer face of the inner layer **22** of the flap **33** is free from adhesive. For example, this may be achieved during production by cancelling or removing the adhesive from the outer face of the inner layer **22** of the flap **33.**

The border **34** between the inner layer **22** of the main section **35** and the inner layer **22** of the flap **33** is preferably perforated to facilitate separation of the main section **35** and the flap **33.** Similarly the border **36** the between the inner layer **22** of the main section **35** and the inner layer **22** of the base section **37** is preferably engraved to facilitate separation of the main section **35** and the base section **37.** Other means to facilitate separation, for example perforations instead of cuts, may be used. The perforation lines **34** and the cuts **36** of a series of covers **20** are depicted in **Figure 5****,** which shows schematically an intermediate stage of the production of a roll including covers **20.** **Figure 6** shows schematically the roll towards the end of the production, with the contour of individual covers shown in full lines.

During production, the inner layer **22** of the main section **35** is cut in two segments, a fixed segment **35a** and a detachable segment **35b.** As shown in **Figure 1 and Figure 2****,** the inner layer **22** of the main section **35** is split by a cut **35c** to an elongated fixed segment **35a** and a ring-shaped, detachable segment **35b** that surrounds the fixed segment **35a.** In another embodiment, the detachable segment may be C-shaped and surround partially the fixed segment. The fixed segment **35a** is dimensioned so that it fits to the lid **53** of the container **50.**

The inner face of the detachable segment **35b** that adheres to the inner face of the outer layer **24** is partially coated with release varnish. The inner face of the outer layer **24** that adheres to the inner face of the detachable segment **35b** has a layer of reclosable adhesive, i.e. an adhesive that may be used a plurality of times. Such adhesives are usually used, when an item is to be adhered or stuck and removed from a surface more than once. Items that are joined with a reclosable adhesive may be separated without being damaged.

In order to prohibit the detachment of the fixed segment **35a** from the outer layer **24,** the inner face of the fixed segment **35a** that adheres to the inner face of the outer layer **24** is not coated with relish varnish. The shape, the dimensions and the means to impede the detachment of the fixed segment **35a** from the outer layer **24** are only presented as one of many examples. In general these features are selected taking into consideration the features of the lid **53** of the container **50.**

The inner and the outer layers of each one of the base section **37** and the flap **33** adhere to each other with adhesive that is preferably provided on the inner surface of the outer layer **24.**

An example of a cover **20** has an inner layer **22** with a thickness within a range of 40 µm to 50 µm and an outer layer **24** within a range of 60 µm to 90 µm . In such an example the thickness of the cover **20** is less than 140 µm, so that the cover **20** may be soft and flexible. Preferably the inner layer **22** and the outer layer **24** are made of recyclable material, for example from polypropylene, i.e. PP.

The raw materials that are used for the production of a roll with adhesive covers include two rolls with a liner and a self-adhesive material. One of the rolls provides the inner layers of the covers and the other roll provides the outer layers of the covers. **Figure 5** shows the roll of raw material, which provides the inner layer of the covers, at an intermediate stage of production.

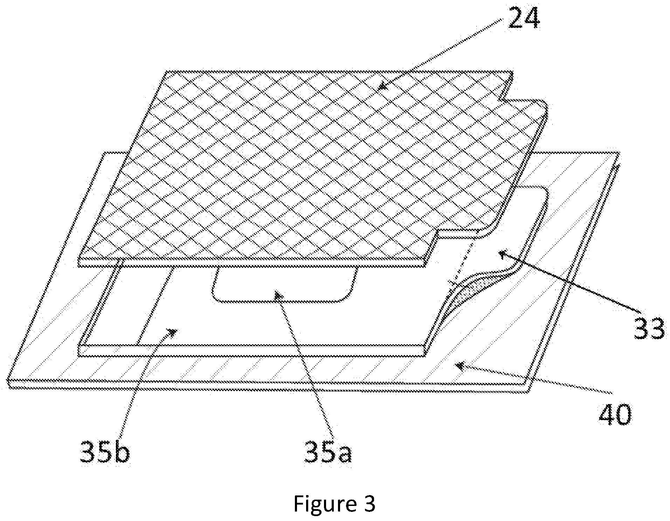

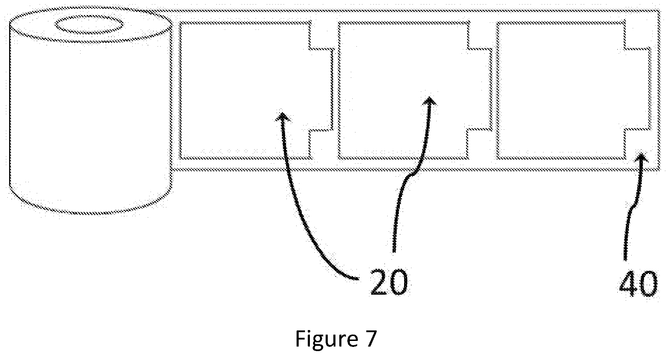

A method of production of a roll with the adhesive covers that are presented above includes the following steps:
- Provide a first roll - raw material - with a liner **40** and a self-adhesive layer, i.e. face material, whereby the self-adhesive layer has a face in contact with the liner **40** and a free face. The face of the self-adhesive that is in contact with the liner **40** is coated with reclosable adhesive. In general, the use of reclosable adhesive allows the use of the adhesive a number of times, i.e. it allows to stick a surface that is provided with reclosable adhesive a plurality of times, without destroying it. The self-adhesive layer of the first roll will provide the inner layers **22** of the covers **20.**
- Separate the liner **40** and the face material of the first roll.
- Cancel/remove the adhesive on the areas of the self-adhesive layer, which correspond to the flap **33** of the covers **20** that are under production.
- Recombine the liner **40** with the face material.
- Engrave the self-adhesive layer to form the cut **35c,** which is a border line between the detachable segment **35b** and the fixed segment **35a** of each one of the covers **20** that are under production.
- Perforate the self-adhesive layer to form the perforation line **34** between the detachable segment **35b** and the flap **33** of each one of the covers **20** that are under production.
- Engrave the self-adhesive layer to form the border **36** of the detachable segment **35b** and the base section **37** of each one of the covers **20** that are under production. All three above mentioned engraving and perforation steps, which produce cuts **35c** and **36** and perforation line **34,** or any two of these steps may be performed simultaneously. Alternatively they may be performed sequentially.
- Coat the outer face of the self-adhesive, i.e. the face that is not in contact with the liner **40,** of the first roll with a release varnish. The coating is applied on the area of the outer face the liner **40,** which corresponds to the detachable segments **35b** of the covers **20** under production. In use, the detachable segments **35b** will adhere to the surface of the container **50** around the lid **53** of the container **50.** **Figure 5** presents the first roll, upon completion of the above mentioned steps.
- Provide a second roll - raw material - with a liner and a self-adhesive layer, i.e. face material, whereby the self-adhesive layer has a face in contact with the liner. The face of the self-adhesive that is in contact with the liner, i.e. the inner face, is coated with reclosable adhesive. The self-adhesive layer of the second roll will provide the outer layers **24** of the covers **20.**
- Separate the liner and the face material of the second roll.
- Attach the self-adhesive layer of the second roll on the self-adhesive layer of the first roll. The attachment is achieved by adhering the self-adhesive layer of the second roll to the self-adhesive layer of the first roll, which is partially coated with release varnish.
- Cut the sandwich of the self-adhesive layer of the first roll and the self-adhesive layer of the second roll to produce the self-adhesive covers **20.**
- Remove the waste material that is produced during the cutting of the covers **20** to obtain a liner **40** that carries a plurality of self-adhesive covers **20.** Such a roll is shown schematically in **Figure 7** and an individual cover **20** on the liner **40** is shown schematically in **Figure 3****.** In **Figure 3** the outer layer **24** is placed at a distance from the inner layer **22** in order to show the arrangement of the inner layer **22.**

The width of the rolls that are used for the production, i.e. the raw material, may accommodate one, two or more series of covers **20.** A solely indicative and preferable thickness of the self-adhesive layer of the first roll, i.e. the roll that provides the inner layer of the covers **20** is approximately 50 µm.

During production of the container **50,** the covers **20** are removed from the liner and placed on the top of the lid **53** of the container **50,** so that the fixed segment **35a** covers the lid **53** and the detachable segment **35b** adheres to the surface of the container **50** around the lid **53.** When the user wishes to remove an item from the container **50** s(he) lifts the cover **20** that carries the lid **53,** so as to provide access to the interior of the container **50** through its opening **55.** After lifting and re-sticking the cover **20** to the container **50** a number of times, the reclosable adhesive on the outer face of the detachable segment **35b** becomes ineffective, because of dirt etc. Then the user lifts the cover **20** and removes the detachable segment **35b,** while the inner layer of the flap **33** and the inner layer of the base section **37** are separated from the main section **35.** The separation is facilitated by the perforation **34** and the cuts **36.** The fixed segment **35a** remains adhered to the outer layer, with the lid **53** attached to it. Separation of the fixed segment **35a** form the detachable segment **35b** is facilitated by the cut **35c.**

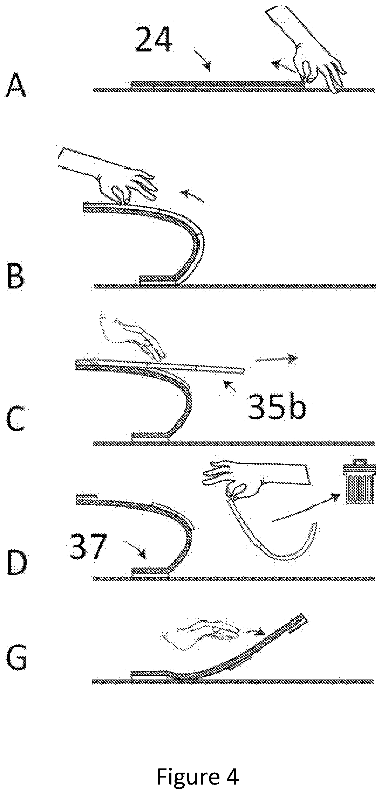

**Figure 4** illustrates the sequence of the withdrawal and removal of the detachable segment **35b** from the cover **20: A** designates the lifting of the cover **20** from a surface, **B, C and D** designate the removal of the detachable segment **35b** and **G** designates the attachment of the cover **20** on the surface after the removal of the detachable segment **35b.** After the removal of the detachable segment **35b,** the cover **20** may still cover and seal the opening of the container **50,** with the inner surface of the outer layer of the main section **35** adhering with reclosable adhesive thereto.

An embodiment of the cover **20** according to the invention includes an inner layer **22** that has an inner face and an outer face and an outer layer **24** that has an inner face and an outer face, whereby the cover has a main section **35** that includes a portion of the inner layer **22** and a portion of the outer layer **24,** a base section **37** that includes a portion of the inner layer **22** and a portion of the outer layer **24** and a flap **33** that includes a portion of the inner layer **22** and a portion of the outer layer **24,** the main section **35,** the base section **37** and the flap **33** being three distinct sections. The inner face of the outer layer **24** and the inner face of the inner layer **22** comprise means to adhere the inner layer **22** and the outer layer **24** to each other, the outer face of the inner layer **22** is at least partially coated with reclosable adhesive to adhere, in use, at least partially to a surface. The portion of the inner layer **22** that is included in the main section **35** has a fixed segment **35a** and a detachable segment **35b,** which detachable segment **35b** adheres to the outer layer **24** and has an outer face that is part of the outer face of the inner layer **22** and is at least partially covered with reclosable adhesive, and between the detachable segment **35b** and the fixed segment **35a** there is a border **35c** that facilitates separation of the detachable segment **35b** and the fixed segment **35a.** Further, at least one of the inner layer **22** and the outer layer **24** comprises means other than said border **35c** to allow separation and subsequent withdrawal of the detachable segment **35b** from the cover **20.**

## Claims

1. Cover **(20)** including an inner layer **(22)** that has an inner face and an outer face and an outer layer **(24)** that has an inner face and an outer face, whereby
• the inner face of the outer layer **(24)** and the inner face of the inner layer **(22)** comprise means to adhere the inner layer **(22)** and the outer layer **(24)** to each other,
• the inner layer **(22)** has a detachable segment **(35b)** which adheres to the outer layer **(24)** and which has an outer face that is part of the outer face of the inner layer **(22)** and that is at least partially covered with reclosable adhesive,
• the detachable segment **(35b)** has an inner face that is part of the inner face of the inner layer **(22)** and the inner face of the detachable segment **(35b)** adheres to an area of the inner face of the outer layer **(24),** which area is at least partially coated with reclosable adhesive
• at least one of the inner layer **(22)** and the outer layer **(24)** comprises means **(34, 35c, 36)** to facilitate separation and subsequent withdrawal of the detachable segment **(35b)** from the cover **(20).**

2. Cover **according to claim 1,** whereby the detachable segment **(35b)** has an inner face that is part of the inner face of the inner layer **(22)** and the inner face of the detachable segment **(35b)** is coated at least partially with release varnish.

3. Cover **according to claims 1 or claim 2,** whereby the means to facilitate separation and the subsequent withdrawal of the detachable segment **(35b)** from the cover **(20)** comprises one or more cuts **(36)** and/or one or more perforation lines **(34)** provided on the inner layer **(22).**

4. Cover **according to any one of claims 1 to 3**, which has a flap, which includes a portion of the inner layer **(22)** and a portion of the outer layer **(24),** with a perforation line **(34)** between the detachable segment **(35b)** and the portion of the inner layer **(22)** of the flap **(33).**

5. Cover **according to any one of claims 1 to 4**, whereby the inner layer **(22)** has a fixed segment **(35a),** the detachable segment **(35b)** surrounds at least partially the fixed segment **(35a)** and between the detachable segment **(35b)** and the fixed segment **(35a)** there is a cut **(35c)** that facilitates the separation of the detachable segment **(35b)** and the fixed segment **(35a).**

6. Cover **according to any one of claims 1 to 5**, whereby the inner layer **(22)** has a fixed segment **(35a),** the detachable segment **(35b)** forms a ring around the fixed segment **(35a)** and between the detachable segment **(35b)** and the fixed segment **(35a)** there is a cut **(35c)** that facilitates the separation of the detachable segment **(35b)** and the fixed segment **(35a).**

7. Cover **according to any one of claims 1 to 4**, whereby
• the cover has a main section **(35)** that includes a portion of the inner layer **(22)** and a portion of the outer layer **(24),** a base section **(37)** that includes a portion of the inner layer **(22)** and a portion of the outer layer **(24)** and a flap **(33)** that includes a portion of the inner layer **(22)** and a portion of the outer layer **(24),** the main section **(35),** the base section **(37)** and the flap **(33)** being three distinct sections,
• the portion of the inner layer **(22)** that is included in the main section **(35)** comprises the detachable segment **(35b)** and a fixed segment **(35a),**
• between the detachable segment **(35b)** and the fixed segment **(35a)** there is a border **(35c)** that facilitates separation of the detachable segment **(35b)** and the fixed segment **(35a),**
• the inner layer **(22)** comprises means **(34, 36)** other than said border **(35c)** to facilitate separation and subsequent withdrawal of the detachable segment **(35b)** from the cover **(20).**

8. Container **(50)** with an external surface, means **(55)** on the external surface to allow access in the interior of the container **(50),** the container **(50)** further including a cover **(20) according to any one of claims 1 to 7,** whereby the inner layer **(22)** adheres to the external surface of the container **(50)** and whereby the detachable segment **(35b)** adheres to the external surface of the container **(50)** with reclosable adhesive.

9. Container **(50) according to claim 8,** whereby the means **(55)** on the external surface to allow access in the interior of the container **(50)** is an opening **(55)** and the detachable segment **(35b)** adheres to the external surface of the container **(50)** around the opening **(55).**

10. Container **(50) according to claim 9** with a lid **(53)** that covers the opening **(55),** and the detachable segment **(35b)** adheres to the external surface of the container **(50)** around the lid **(53).**

11. Container **(50) according to any one of claims 8 to 10**, whereby the cover **(20)** has a base section **(37)** fixed along an edge of the cover **(20),** which base section **(37)** adheres to the container **(50),** and a cut **(36)** between the base section **(37)** and the detachable segment **(35b).**

12. Container **(50) according to any one of claims 8 to 11**, including a cover **(20) according to any one of claim 6 to 8**, whereby the means **(55)** on the external surface to allow access in the interior of the container **(50)** is an opening **(55)** with a lid **(53)** that covers the opening **(55),** and the fixed segment **(35a)** adheres to the lid **(53).**

13. A roll including a liner and a plurality of adhesive covers **(20) according to any one of claims 1 to 7** arranged along the liner.

14. Method of production of a roll with a plurality of covers **(20),** whereby each cover includes an outer layer **(24),** an inner layer **(22)** with a detachable segment **(35b)** that has an inner face that adheres to the outer layer **(24)** and an outer face that is at least partially covered with reclosable adhesive and whereby each cover **(20)** further comprises means **(34, 36)** facilitating the separation and removal of the detachable segment **(35b)** from the inner layer **(22),** the method comprising the following steps:
• providing a roll with a liner **(40)** and a self-adhesive layer with a first face that adheres with reclosable adhesive to the liner and a free face;
• applying a release varnish on predefined areas of the free face, whereby the predetermined areas correspond to the detachable segments **(35b)** of the covers **(20)** under production;
• engraving or perforating the self-adhesive material of the roll to form a border **(35c)** of the detachable segment **(35b)** of the covers **(20)** under production and producing the means **(34, 36)** other than said border **(35c)** facilitating the separation and removal of the detachable segments **(35b)** from the inner layer **(22)** of the covers **(20)** under production;
• adhering a further self-adhesive layer to the free face of the self-adhesive layer of the roll, whereby the predetermined areas that correspond to the detachable segments **(35b)** of the covers **(20)** under production adheres to an area of the further self-adhesive layer that is coated with reclosable adhesive;
• engraving the sandwich of the self-adhesive layer of the roll and the further self-adhesive layer, so as to produce a plurality of covers **(20)** and waste material.

15. Method of production **according to claim 14**, whereby the predefined areas on which the release varnish is applied, enclose at least partially areas of the outer face of the inner layer **(22),** on which no release varnish is applied, so as to be fixed to the further self-adhesive layer.

16. Method **according to claim 14 or to claim 15,** comprising engraving the self-adhesive material of the roll to form a border between the detachable segment **(35b)** and a fixed segment **(35a)** of the inner layer **(22)** of the covers **(20)** under production and perforating the self-adhesive material of the roll to form a border between the detachable segment **(35b)** and a flap of the covers **(20)** under production, whereby the fixed segment **(35a)** and the flap **(33)** of each cover **(20)** are distinct elements with at least part of the detachable segment **(35b)** being in between.

17. Method **according to any one of claims 14 to 16**, comprising the following steps:
• separating the liner **(40)** and the self-adhesive layer;
• canceling or removing the adhesive on areas of the first face of the self-adhesive layer, which correspond to flaps **(33)** of the covers **(20)** under production;
• recombine the liner **(40)** and the self-adhesive layer.

## Patentansprüche

1. Abdeckung (20), die eine Innenschicht (22), die eine Innenseite und eine Außenseite aufweist, und eine Außenschicht (24), die eine Innenseite und eine Außenseite aufweist, beinhaltet, wobei
- die Innenseite der Außenschicht (24) und die Innenseite der Innenschicht (22) Mittel umfassen, um die Innenschicht (22) und die Außenschicht (24) aneinander zu kleben,
- die Innenschicht (22) ein abnehmbares Segment (35b) aufweist, das an der Außenschicht (24) haftet und eine Außenseite aufweist, die Teil der Außenseite der Innenschicht (22) ist und die mindestens teilweise mit wiederverschließbarem Klebstoff bedeckt ist,
- das abnehmbare Segment (35b) eine Innenseite aufweist, die Teil der Innenseite der Innenschicht (22) ist, und die Innenseite des abnehmbaren Segments (35b) an einem Bereich der Innenseite der Außenschicht (24) haftet, der mindestens teilweise mit wiederverschließbarem Klebstoff beschichtet ist
- mindestens eine der Innenschicht (22) und der Außenschicht (24) Mittel (34, 35c, 36) umfasst, um die Trennung und das anschließende Herausziehen des abnehmbaren Segments (35b) aus der Abdeckung (20) zu erleichtern.

2. Abdeckung nach Anspruch 1, wobei das abnehmbare Segment (35b) eine Innenseite aufweist, die Teil der Innenseite der Innenschicht (22) ist, und die Innenseite des abnehmbaren Segments (35b) mindestens teilweise mit Trennlack beschichtet ist.

3. Abdeckung nach Anspruch 1 oder Anspruch 2, wobei das Mittel zur Erleichterung der Trennung und des anschließenden Herausziehens des abnehmbaren Segments (35b) aus der Abdeckung (20) einen oder mehrere Einschnitte (36) und/oder eine oder mehrere Perforationslinien (34) umfasst, die auf der Innenschicht (22) bereitgestellt sind.

4. Abdeckung nach einem der Ansprüche 1 bis 3, die eine Klappe aufweist, die einen Teil der Innenschicht (22) und einen Teil der Außenschicht (24) beinhaltet, mit einer Perforationslinie (34) zwischen dem abnehmbaren Segment (35b) und dem Teil der Innenschicht (22) der Klappe (33).

5. Abdeckung nach einem der Ansprüche 1 bis 4, wobei die Innenschicht (22) ein festes Segment (35a) aufweist, das abnehmbare Segment (35b) das feste Segment (35a) mindestens teilweise umgibt und zwischen dem abnehmbaren Segment (35b) und dem festen Segment (35a) ein Einschnitt (35c) vorhanden ist, der die Trennung des abnehmbaren Segments (35b) und des festen Segments (35a) erleichtert.

6. Abdeckung nach einem der Ansprüche 1 bis 5, wobei die Innenschicht (22) ein festes Segment (35a) aufweist, das abnehmbare Segment (35b) einen Ring um das feste Segment (35a) bildet und zwischen dem abnehmbaren Segment (35b) und dem festen Segment (35a) ein Einschnitt (35c) vorhanden ist, der die Trennung des abnehmbaren Segments (35b) und des festen Segments (35a) erleichtert.

7. Abdeckung nach einem der Ansprüche 1 bis 4, wobei
- die Abdeckung einen Hauptabschnitt (35), der einen Teil der Innenschicht (22) und einen Teil der Außenschicht (24) beinhaltet, einen Bodenabschnitt (37), der einen Teil der Innenschicht (22) und einen Teil der Außenschicht (24) beinhaltet, und eine Klappe (33) aufweist, die einen Teil der Innenschicht (22) und einen Teil der Außenschicht (24) beinhaltet, wobei der Hauptabschnitt (35), der Bodenabschnitt (37) und die Klappe (33) drei verschiedene Abschnitte sind,
- der Teil der Innenschicht (22), der in dem Hauptabschnitt (35) enthalten ist, das abnehmbare Segment (35b) und ein festes Segment (35a) umfasst,
- zwischen dem abnehmbaren Segment (35b) und dem festen Segment (35a) ein Rand (35c) vorhanden ist, der die Trennung des abnehmbaren Segments (35b) und des festen Segments (35a) erleichtert,
- die Innenschicht (22) andere Mittel (34, 36) als den Rand (35c) umfasst, um die Trennung und das anschließende Herausziehen des abnehmbaren Segments (35b) aus der Abdeckung (20) zu erleichtern.

8. Behälter (50) mit einer Außenfläche, Mitteln (55) auf der Außenfläche, um einen Zugang in das Innere des Behälters (50) zu ermöglichen, wobei der Behälter (50) weiter eine Abdeckung (20) nach einem der Ansprüche 1 bis 7 beinhaltet, wobei die Innenschicht (22) an der Außenfläche des Behälters (50) haftet und wobei das abnehmbare Segment (35b) mit wiederverschließbarem Klebstoff an der Außenfläche des Behälters (50) haftet.

9. Behälter (50) nach Anspruch 8, wobei das Mittel (55) an der Außenfläche, das den Zugang in das Innere des Behälters (50) ermöglicht, eine Öffnung (55) ist und das abnehmbare Segment (35b) an der Außenfläche des Behälters (50) um die Öffnung (55) herum haftet.

10. Behälter (50) nach Anspruch 9 mit einem Deckel (53), der die Öffnung (55) abdeckt, wobei das abnehmbare Segment (35b) an der Außenfläche des Behälters (50) um den Deckel (53) herum haftet.

11. Behälter (50) nach einem der Ansprüche 8 bis 10, wobei die Abdeckung (20) einen Bodenabschnitt (37), der entlang eines Randes der Abdeckung (20) befestigt ist, deren Bodenabschnitt (37) an dem Behälter (50) haftet, und einen Einschnitt (36) zwischen dem Bodenabschnitt (37) und dem abnehmbaren Segment (35b) aufweist.

12. Behälter (50) nach einem der Ansprüche 8 bis 11, der eine Abdeckung (20) nach einem der Ansprüche 6 bis 8 beinhaltet, wobei das Mittel (55) an der Außenfläche, das den Zugang in das Innere des Behälters (50) ermöglicht, eine Öffnung (55) mit einem Deckel (53) ist, der die Öffnung (55) abdeckt, und das feste Segment (35a) an dem Deckel (53) haftet.

13. Rolle, die eine Auskleidung und eine Vielzahl von entlang der Auskleidung angeordneten Klebstoffabdeckungen (20) nach einem der Ansprüche 1 bis 7 beinhaltet.

14. Verfahren zur Herstellung einer Rolle mit einer Vielzahl von Abdeckungen (20), wobei jede Abdeckung eine Außenschicht (24), eine Innenschicht (22) mit einem abnehmbaren Segment (35b), das eine an der Außenschicht (24) haftende Innenseite und eine mindestens teilweise mit wiederverschließbarem Klebstoff bedeckte Außenseite aufweist, beinhaltet und wobei jede Abdeckung (20) weiter Mittel (34, 36) umfasst, die die Trennung und Entfernung des abnehmbaren Segments (35b) von der Innenschicht (22) erleichtern, wobei das Verfahren die folgenden Schritte umfasst:
- Bereitstellen einer Rolle mit einer Auskleidung (40) und einer selbstklebenden Schicht mit einer ersten Seite, die mit wiederverschließbarem Klebstoff an der Auskleidung haftet, und einer freien Seite;
- Auftragen eines Trennlacks auf vorbestimmte Bereiche der freien Seite, wobei die vorbestimmten Bereiche den abnehmbaren Segmenten (35b) der in Produktion befindlichen Abdeckungen (20) entsprechen;
- Gravieren oder Perforieren des selbstklebenden Materials der Rolle, um einen Rand (35c) des abnehmbaren Segments (35b) der in Produktion befindlichen Abdeckungen (20) zu bilden, und Herstellen von anderen Mitteln (34, 36) als dem Rand (35c), die die Trennung und Entfernung der abnehmbaren Segmente (35b) von der Innenschicht (22) der in Produktion befindlichen Abdeckungen (20) erleichtern;
- Aufkleben einer weiteren selbstklebenden Schicht auf die freie Seite der selbstklebenden Schicht der Rolle, wobei die vorbestimmten Bereiche, die den abnehmbaren Segmenten (35b) der in Produktion befindlichen Abdeckungen (20) entsprechen, an einem Bereich der weiteren selbstklebenden Schicht haften, der mit wiederverschließbarem Klebstoff beschichtet ist;
- Gravieren des Verbunds aus der selbstklebenden Schicht der Rolle und der weiteren selbstklebenden Schicht, sodass eine Vielzahl von Abdeckungen (20) und Abfallmaterial hergestellt wird.

15. Herstellungsverfahren nach Anspruch 14, wobei die vordefinierten Bereiche, auf die der Trennlack aufgetragen wird, Bereiche der Außenseite der Innenschicht (22), auf die kein Trennlack aufgetragen wird, mindestens teilweise einschließen, um mit der weiteren selbstklebenden Schicht verbunden zu werden.

16. Verfahren nach Anspruch 14 oder Anspruch 15, umfassend das Gravieren des selbstklebenden Materials der Rolle, um eine Grenze zwischen dem abnehmbaren Segment (35b) und einem festen Segment (35a) der Innenschicht (22) der in Produktion befindlichen Abdeckungen (20) zu bilden, und das Perforieren des selbstklebenden Materials der Rolle, um eine Grenze zwischen dem abnehmbaren Segment (35b) und einer Klappe der in Produktion befindlichen Abdeckungen (20) zu bilden, wobei das feste Segment (35a) und die Klappe (33) jeder Abdeckung (20) unterschiedliche Elemente sind, wobei sich mindestens ein Teil des abnehmbaren Segments (35b) dazwischen befindet.

17. Verfahren nach einem der Ansprüche 14 bis 16, umfassend die folgenden Schritte:
- Trennen der Auskleidung (40) und der selbstklebenden Schicht;
- Ablösen oder Entfernen des Klebstoffs auf den Bereichen der ersten Seite der selbstklebenden Schicht, die den Klappen (33) der in Produktion befindlichen Abdeckungen (20) entsprechen;
- Zusammenfügen der Auskleidung (40) und der selbstklebenden Schicht.

## Revendications

1. Rabat (20) comprenant une couche interne (22) qui comprend une face interne et une face externe, et une couche externe (24) qui comprend une face interne et une face externe, moyennant quoi
• la face interne de la couche externe (24) et la face interne de la couche interne (22) comprennent des moyens afin qu'elles adhèrent la couche interne (22) et la couche externe (24) l'une à l'autre,
• la couche interne (22) comprend un segment amovible (35b), qui adhère à la couche externe (24) et qui comprend une face externe qui fait partie de la face externe de la couche interne (22) et qui est au moins partiellement recouverte d'un adhésif repositionnable,
• le segment amovible (35b) comprend une face interne qui fait partie de la face interne de la couche interne (22) et la face interne du segment amovible (35b) adhère à une zone de la face interne de la couche externe (24), laquelle zone est au moins partiellement recouverte d'un adhésif repositionnable
• au moins l'une de la couche interne (22) et la couche externe (24) comprend des moyens (34, 36) afin de permettre la séparation puis le retrait du segment amovible (35b) du rabat (20).

2. Rabat selon la revendication 1, moyennant quoi le segment amovible (35b) comprend une face interne qui fait partie de la face interne de la couche interne (22) et la face interne du segment amovible (35b) est au moins partiellement revêtue d'un vernis de libération.

3. Rabat selon la revendication 1 ou la revendication 2, moyennant quoi les moyens afin de permettre la séparation puis le retrait du segment amovible (35b) du rabat (20) comprennent une ou plusieurs découpes et/ou une ou plusieurs lignes de perforation disposées sur la couche interne

4. Rabat selon l'une quelconque des revendications 1 à 3, qui comprend un volet qui comprend une partie de la couche interne (22) et une partie de la couche externe (24), avec une ligne de perforation (34) entre le segment amovible (35b) et la partie de la couche interne (22) du volet (33).

5. Rabat selon l'une quelconque des revendications 1 à 4, moyennant quoi la couche interne (22) comprend un segment fixe (35a), le segment amovible (35b) entoure au moins partiellement le segment fixe (35a) et entre le segment amovible (35b) et le segment fixe (35a) il y a une découpe (35c) qui facilite la séparation du segment amovible (35b) et du segment fixe (35a).

6. Rabat selon l'une quelconque des revendications 1 à 5, moyennant quoi la couche interne (22) comprend un segment fixe (35a), le segment amovible (35b) forme un anneau autour du segment fixe (35a) et entre le segment amovible (35b) et le segment fixe (35a) il y a une découpe (35c) qui facilite la séparation du segment amovible (35b) et du segment fixe (35a).

7. Rabat selon l'une quelconque des revendications 1 à 4, moyennant quoi
• le rabat a une section principale (35) qui comprend une partie de la couche interne (22) et une partie de la couche externe (24), une section de base (37) qui comprend une partie de la couche interne (22) et une partie de la couche externe (24) et un volet (33) qui comprend une partie de la couche interne (22) et une partie de la couche externe (24), la section principale (35), la section de base (37) et le volet (33) étant trois sections distinctes,
• la partie de la couche interne (22) qui est incluse dans la section principale (35) comprend le segment amovible (35b) et un segment fixe (35a),
• entre le segment amovible (35b) et le segment fixe (35a), il y a une bordure (35c) qui facilite la séparation du segment amovible (35b) et du segment fixe (35a),
• la couche interne (22) comprend des moyens (34, 36) autres que ladite bordure (35c) afin de permettre la séparation puis le retrait du segment amovible (35b) du rabat (20).

8. Contenant (50) avec une surface externe, des moyens (55) sur la surface externe pour permettre l'accès à l'intérieur du contenant (50), le contenant (50) comprenant en outre un rabat (20) selon l'une quelconque des revendications 1 à 7, moyennant quoi la couche interne (22) adhère à la surface externe du contenant (50) et moyennant quoi le segment amovible (35b) adhère à la surface externe du contenant (50) par un adhésif repositionnable.

9. Contenant (50) selon la revendication 8, moyennant quoi les moyens (55) sur la surface externe pour permettre l'accès à l'intérieur du contenant (50), il y a une ouverture (55) et le segment amovible (35b) adhère à la surface externe du contenant (50) autour de l'ouverture (55).

10. Contenant (50) selon la revendication 9, avec un couvercle (53) qui recouvre l'ouverture (55), et le segment amovible (35b) adhère à la surface externe du contenant (50) autour du couvercle (53).

11. Contenant (50) selon l'une quelconque des revendications 8 à 10, moyennant quoi le rabat (20) comprend une section de base (37) fixée le long d'un bord du rabat (20), laquelle section de base (37) adhère au contenant (50), et une découpe (36) entre la section de base (37) et le segment amovible (35b).

12. Contenant (50) selon l'une quelconque des revendications 8 à 11, comprenant un rabat (20) selon l'une quelconque des revendications 6 à 8, moyennant quoi les moyens (55) sur la surface externe pour permettre l'accès à l'intérieur du contenant (50) est une ouverture (55) avec un couvercle (53) qui recouvre l'ouverture (55), et le segment fixe (35a) adhère au couvercle (53).

13. Rouleau comprenant une protection et une pluralité des rabats adhésifs (20) selon l'une quelconque des revendications 1 à 7 agencés le long de la protection

14. Procédé de production d'un rouleau avec des plusieurs rabats (20), moyennant quoi chacun des rabats comprend une couche externe (24), une couche interne (22) avec un segment amovible (35b) qui comprend une face interne qui adhère à la couche externe (24) et une face externe qui est au moins partiellement recouverte d'un adhésif repositionnable et moyennant quoi chaque rabat (20) comprend en outre des moyens (34, 36) facilitant la séparation et le retrait du segment amovible (35b) de la couche interne (22), le procédé comprenant les étapes suivantes:
• fournir un rouleau avec une protection (40) et une couche auto-adhésive avec une première face qui adhère avec un adhésif repositionnable à la protection et une face libre;
• appliquer un vernis de libération sur des zones prédéfinies de la face libre, moyennant quoi les zones prédéterminées correspondent aux segments amovibles (35b) des rabats (20) en cours de production;
• graver ou perforer le matériau auto-adhésif du rouleau pour former une bordure (35c) du segment amovible (35b) des rabats (20) en cours de production et produire les moyens (34, 36) autre que ladite bordure (35c) facilitant la séparation et le retrait des segments amovibles (35b) de la couche interne (22) des rabats (20) en cours de production ;
• faire adhérer une autre couche auto-adhésive à la face libre de la couche autoadhésive du rouleau, moyennant quoi les zones prédéterminées qui correspondent aux segments amovibles (35b) des rabats (20) en cours de production adhèrent à une zone de l'autre couche auto-adhésive qui est revêtue d'un adhésif repositionnable;
• graver le sandwich de la couche auto-adhésive du rouleau et de l'autre couche auto-adhésive, de manière à produire une pluralité de rabats (20) et de déchets.

15. Procédé de production selon la revendication 14, moyennant quoi les zones prédéfinies sur lesquelles le vernis de libération est appliqué, entourent au moins partiellement des zones de la face externe de la couche interne (22), sur lesquelles aucun vernis de libération n'est appliqué, de manière à être fixées à la couche auto-adhésive supplémentaire.

16. Procédé de production selon la revendication 14 ou la revendication 15, comprenant graver le matériau auto-adhésive du rouleau afin de former une bordure entre le segment amovible (35b) et un segment fixe (35a) de la couche interne (22) des rabats (20) en cours de production et perforer le matériau auto-adhésif du rouleau pour former une bordure entre le segment amovible (35b) et un volet des rabats (20) en cours de production, moyennant quoi le segment fixe (35a) et le volet (33) de chaque rabat (20) sont des éléments distincts une partie au moins du segment amovible (35b) se trouvant entre les deux.

17. Procédé selon l'une quelconque des revendications 14 à 16, comprenant les étapes suivantes:
• séparer la protection (40) et la couche auto-adhésive;
• annuler ou retirer l'adhésif sur les zones de la première face de la couche auto-adhésive qui correspondent aux volets (33) des rabats (20) en cours de production;
• recombiner la protection (40) et la couche auto-adhésive.
